# EUROPÄISCHE PATENTSCHRIFT

(11) **EP 1 753 988 B1**
(45) Veröffentlichungstag und Bekanntmachung des Hinweises auf die Patenterteilung: **17.09.2008**
(21) Anmeldenummer: 05729083.5
(22) Anmeldetag: 14.03.2005
(51) Int. Cl.: F16J 15/06

(54) **TRÄGERRAHMENDICHTUNG MIT BEFESTIGUNGSMITTELN ZUR ABDICHTUNG VON MOTORBAUTEILEN**
FRAME MEMBER SEAL COMPRISING FIXING ELEMENTS FOR SEALING ENGINE COMPONENTS
JOINT DE STRUCTURE SUPPORT COMPORTANT DES ELEMENTS DE FIXATION DESTINE A L'ETANCHAGE DE COMPOSANTS DE MOTEUR

(30) Priorität: 08.06.2004 DE 102004027843
(43) Veröffentlichungstag der Anmeldung: 21.02.2007
(73) Patentinhaber: Federal-Mogul Sealing Systems Bretten GmbH, 75015 Bretten (DE)
(72) Erfinder: SEIBERT, Gerhard, 76185 Karlsruhe (DE); KRATZMEIER, Werner, 75015 Bretten (DE)
(74) Vertreter: Becker, Eberhard
(86) Internationale Anmeldenummer: PCT/EP2005/002705
(87) Internationale Veröffentlichungsnummer: WO 2005/121611

(56) Entgegenhaltungen:
- EP-A- 0 402 909
- EP-A- 0 503 143
- WO-A-20/04067941
- DE-C1- 10 100 934
- US-A- 4 867 461
- US-A- 5 716 051

## Beschreibung

Die vorliegende Erfindung betrifft Trägerrahmendichtungen, die metallische Träger und/oder metallische Dichtungsschichten umfassen. Die Erfindung betrifft insbesondere Trägerrahmendichtungen, die Fixiereinrichtungen bzw. Positionierungseinrichtungen zur Positionierung der Trägerrahmendichtung an einem Bauteil umfassen. Insbesondere betrifft die vorliegende Erfindung eine Trägerrahmendichtung, bei der eine Positionierung über angespritzte Positionierungseinrichtungen bzw. Positionierungsdome durchgeführt wird. Derartige Trägerrahmendichtungen sind beispielsweise geeignet für Abdichtungen von Motor- und Zylinderbauteilen von Verbrennungskraftmaschinen, beispielsweise am Ventildeckel oder an der Ölwanne.

Bei Trägerrahmendichtungen tritt das Problem auf, dass eine Trägerrahmendichtung auf einer Dichtfläche so zu fixieren ist, dass bei der Montage der abzudichtenden Bauteile eine sichere Positionierung der Dichtung gewährleistet wird.

Bei jeder Art von Dichtung, die zwischen zwei Dichtflächen von zwei verschiedenen Bauteilen abdichtet, tritt das Problem der Positionierung der Dichtung in Bezug auf die beiden Dichtflächen auf.

Im Stand der Technik werden Trägerrahmendichtungen durch die Verwendung von Passhülsen, Passstiften oder Schrauben an einem der beiden Bauteile positioniert. Somit wird herkömmlicherweise auf Positionierungseinrichtungen zurückgegriffen, die die beiden Bauteile gegeneinander positionieren.

Dem Stand der Technik sind beispielsweise aus dem Deutschen Gebrauchsmuster DE 201 05250 Flachdichtungen mit Klammerlaschen zu ihrer Fixierung auf einer Dichtfläche bekannt, wobei die Klammerlaschen von der Flachdichtung quer zu deren Flächenerstreckung vorragen, und in entsprechende Vertiefungen an einem der Bauelemente eingreifen.

DE 101 00 934 C1 offenbart eine gattungsgemäße Trägerrahmendichtung.

Ein Einsatzgebiet für Flachdichtungen sind Brennkraftmaschinen, in denen sie beispielsweise als Zylinderkopfdichtungen zwischen Zylinderkopf und Zylinderblock sitzen. Häufig werden die Bauteile, zwischen denen die Flachdichtung im Betriebszustand liegt, während der Fertigung bzw. Montage getrennt transportiert oder gehandhabt, wobei die Flachdichtung an einem der Bauteile bereits anliegt. Um ein Verlieren der Flachdichtung zu vermeiden, wird diese an dem Bauteil befestigt.

Dies wurde bisher z. b. durch Festschrauben erreicht. Die Ausbildung von Schraubverbindungen ist jedoch mit erheblichem Fertigungs- und Montageaufwand verbunden. Bekannt ist es auch, am Außenumfang der Flachdichtung Klammerlaschen anzubringen, die das Bauteil übergreifen und an dessen Außenfläche klemmen. Diese vorbekannte Lösung erfordert einen erheblichen Materialmehraufwand gegenüber dem für die eigentliche Flachdichtung benötigten Material, wobei aufgrund der über die Bauteile überstehenden Klammerlaschen bei befestigten Dichtungen eine erhöhte Verletzungsgefahr besteht.

Es ist daher eine Aufgabe der vorliegenden Erfindung, die bestehenden Möglichkeiten zum Ausrichten und Befestigen von Dichtungen und speziell von Trägerrahmendichtungen an zu montierenden Bauteilen zu verbessern.

Es ist zudem erstrebenswert, eine Trägerrahmendichtung verliersicher an einem Motor-Anbauteil (Ölwanne, Zylinderkopfdeckel ...) zu befestigen.

Es ist zudem wünschenswert, eine weiterentwickelte Trägerrahmendichtungen anzugeben, die es gestattet, die Arbeitsabläufe sowohl beim Montieren der Dichtung als auch bei der Montage der Bauteile mit der Trägerrahmendichtung zu verbessern.

Die vorliegende Aufgabe wird gelöst durch eine Trägerrahmendichtung nach Anspruch 1. Diese weist mindestens zwei Befestigungseinrichtungen auf. Die erfindungsgemäßen Befestigungseinrichtungen sind aus Kunststoff oder Elastomer wie z. b. Gummi gebildet und ragen von der Dichtungsebene im Wesentlichen senkrecht vor. Im Folgenden wird die Bezeichnung "Kunststoff" auch verwendet, um Elastomer, Gummi und Elastomer-/Gummiwerkstoffe zu bezeichnen. Die Befestigungseinrichtungen können als Elastomer-Befestigungseinrichtungen realisiert werden. Die Befestigungseinrichtungen sind dabei dazu ausgelegt, in entsprechende Öffnungen an mindestens einem abzudichten Bauteil vorzuragen.

In dieser grundlegenden Ausführungsform sind die Befestigungseinrichtungen im Wesentlichen Vorsprünge in der Form von Kegeln, Kegelstümpfen, Pilzen, Kugelstümpfen, Zylindern bzw. Zylinderstümpfen oder Ellipsoiden bzw. Ellipsoidstümpfen. Die Grundform bzw. die Grundfläche kann im Wesentlichen rund, polygonal oder krummlinig sein. Im folgenden werden die Befestigungseinrichtungen auch als "Befestigungsdome" bezeichnet, um Vorsprünge in der Form von Kegeln, Kegelstümpfen, Pilzen, Kugelstümpfen, Zylindern bzw. Zylinderstümpfen oder Ellipsoiden bzw. Ellipsoidstümpfen zu bezeichnen. Die Grundform bzw. die Grundfläche kann im Wesentlichen rund, polygonal oder krummlinig sein.

In der grundlegenden Ausführungsform ermöglichen die Befestigungseinrichtungen bzw. -dome durch Eingreifen in entsprechende Öffnungen an einem der abzudichtenden Bauteile, dass die Dichtung formschlüssig ausgerichtet wird. Damit kann beispielsweise bei einer automatisierten Fertigung ein selbstzentrierendes Auflegen der Dichtung ermöglicht werden.

Durch die Verwendung von Kunststoffmaterial können für die Befestigungseinrichtungen bzw. -dome beliebige Typen von Dichtungswerkstoffen verwendet werden. An den Trägerrahmen können Kunststoff- oder beispielsweise Elastomervorsprünge angespritzt werden. Die Befestigungseinrichtungen können beispielsweise aus einem Rezyklat hergestellt werden, da die mechanischen Anforderungen nur für den Zeitraum bis zur Montage der abzudichtenden Bauteile aufrecht erhalten werden müssen.

Die Trägerrahmendichtung weist mindestens eine Metalllage auf. Durch die Verwendung von Metalldichtungen können auch mehrlagige Trägerrahmendichtungen mit mindestens einer Metalllage und Dichtungssicken die vorliegende Erfindung nutzen. Die Befestigungseinrichtungen bzw. -dome können auch in einer Spritzgussmaschine direkt an eine Metalldichtung angespritzt werden. Gerade bei Metalldichtungen ist es möglich, dass die Kunststoff-Befestigungsdome aus einem leicht verrottenden, möglicherweise auch biologisch abbaubaren Material bestehen. Die Befestigungsdome können auch durch Vakuum-Tiefziehen oder eine ähnliche Fertigungstechnik an die Trägerrahmendichtung angeformt werden.

Die Verwendung von Befestigungseinrichtungen bzw. -domen aus Kunststoff hat weiterhin den Vorteil, dass auch bereits gehärtete Metalldichtungen verwendet werden können, ohne das gesonderte Bearbeitungsschritte für Befestigungslaschen notwendig werden.

Mindestens eine der Metalllagen ist so geformt, dass sie sich im Wesentlichen senkrecht zur Dichtungsebene in mindestens eine der Befestigungseinrichtungen bzw. -dome erstreckt. Dies kann beispielsweise durch eine Umformtechnik wie Tiefziehen oder Aufbördeln erreicht werden. Dadurch kann das Kunststoffvolumen in dem Befestigungsdom reduziert werden. Darüber hinaus kann der Befestigungsdom formschlüssig an der Trägerrahmendichtung befestigt werden, d. h. auch Kunststoffe mit geringem Haftvermögen an dem Dichtungsmaterial oder einer Trägerlage können verwendet werden. Die Kunststoff-, Elastomer- oder Gummidome können mit einem Blechkern ausgeführt werden. Dies wird durch Elastomerdome realisiert, die mit und ohne Blechkern ausgeführt werden können.

In einer bevorzugten Ausführungsform wird mindestens eine Metalllage durch eine Umformtechnik ausgewählt aus Drücken, Falten, Gesenkschmieden, Prägen, Stanzen, Schneiden, Strecken, Tiefziehen und Ziehen so umgeformt, dass sie sich in dem Bereich mindestens eines Befestigungsdoms erstreckt.

Durch Drücken, Gesenkschmieden, Prägen, Tiefziehen und Ziehen kann aus einem Dichtungsmaterial eine Befestigungsdomartige Struktur herausgeformt werden, was sich positiv auf die Menge des einzusetzenden Kunststoffes auswirken kann.

Durch Stanzen, Schneiden und Strecken kann aus einem Dichtungsmaterial eine Struktur heraus geformt werden, die eine besonders gute Formschlüssigkeit zwischen der Struktur und dem Befestigungseinrichtung bzw. -dom ermöglicht. Es ist möglich durch Stanzen und Falten eine dreidimensionale Struktur zu schaffen, die den Befestigungsdom zusätzlich stabilisiert. Es ist somit möglich, einen kreuzförmigen oder sternförmigen Schnitt zu führen und die kuchenstückartigen Metallzungen senkrecht nach oben zu falten. Damit ergibt sich eine Kronenform, auf die ein Befestigungsdom aus Kunststoff aufgebracht werden kann, der durch diese Struktur stabilisiert wird. Becherartige Strukturen mit einer Seitenwand aus Streckmetall sind ebenfalls möglich.

Mindestens einer der Befestigungseinrichtungen bzw. -dome weist mindestens eine Öffnung auf, die sie sich im Wesentlichen senkrecht zu der Dichtungsebene erstreckt. Bei rotationssymmetrischen Befestigungseinrichtungen kann die Öffnung entlang der Symmetrieachse geführt sein. Eine derartige Ausführungsform ermöglicht es beispielsweise, ein Loch für einen Bolzen zur Positionierung der Trägerrahmendichtung zu verwenden. Dadurch kann auf gesonderte Bohrungen in den abzudichtenden Teilen zur Aufnahme der Befestigungsdome verzichtet werden.

Vorzugsweise weist mindestens einer der Befestigungsdome einen Befestigungsvorsprung in der Form einer Befestigungsnoppe, eine Befestigungsnase bzw. eine Befestigungslippe oder - wulst an der Außenseite auf. Durch Befestigungsnoppen, -nasen und/oder -lippen können die Befestigungseinrichtungen dome durch Kraftschluss bzw. Formschluss in einer Öffnung an einer der abzudichtenden Teile befestigt werden. Wird der Befestigungsvorsprung am Außendurchmesser der Befestigungseinrichtung bzw. -dom angebracht und zusätzlich ein Blechkern im Dom angebracht, erfolgt die Fixierung durch Kraft- bzw. Reibschluss. Die Trägerrahmendichtung kann dadurch sowohl in der Dichtfläche als auch senkrecht zur Dichtfläche positioniert werden.

Diese Ausführungsform kann dadurch umgesetzt werden, dass an die Befestigungseinrichtungen bzw. -dome eine außen liegenden Noppe, Nase, Lippe oder Wulst an die Trägerrahmendichtung angespritzt werden. Die Befestigungseinrichtungen werden über die Noppen, Nasen durch Kraft- bzw. Reibschluss in entsprechenden Öffnungen an beispielsweise einem Motorblock fixiert. Die Elastomer-Befestigungseinrichtungen können mit einem Kunststoff oder einem Blechkern verstärkt sein. Die Trägerrahmendichtung wird in einer Lage auf der Dichtfläche fixiert, wobei die Befestigungsdome auch als Verliersicherung dienen.

Erfindungsgemäß ist mindestens einer der Befestigungseinrichtungen bzw. -dome mit mindestens einer Befestigungsnoppe, -nase bzw. -lippe an der Innenseite der Öffnung des Befestigungseinrichtung versehen. Durch Noppen oder Nasen am Elastomer-Befestigungsdom kann sowohl eine Verliersicherung als auch eine Zentrierung erreicht werden. Eine Befestigungslippe an der Innenseite eines Befestigungsdoms weist den besonderen Vorteil auf, dass durch die Öffnungen der Dome gesteckte Schrauben bzw. Bolzen sicher gehalten werden. Damit kann ein Bauteil bereits mit einer Dichtung und einem kompletten Schraubensatz (oder auch Nietensatz) bereitgestellt bzw. ausgeliefert werden, was eine einfache Verschraubung mittels Automaten ohne Schraubenzuführungseinrichtung ermöglicht. Wird die Nase am Innendurchmesser des Domes angebracht, erfolgt die Fixierung senkrecht zur Dichtfläche (als Verliersicherung) durch Eingreifen an bzw. "Einklinken" eines Bundes einer Schraube oder Hülse.

Dies kann umgesetzt werden, indem an jeder Verschraubungsstelle Befestigungseinrichtungen bzw. -dome aus einem Elastomerwerkstoff angespritzt werden. In diese Befestigungsdome können Hülsen oder Bundschrauben eingeklinkt werden. Durch den Bund an Hülse oder Bundschraube wird die Trägerrahmendichtung durch eine nach innen weisende Nase oder Lippe gehalten. Die Dichtung und ein Entkoppelelement (oder Schraube) können somit gemeinsam an einem Motor-Anbauteil vormontiert werden.

In dieser Ausführungsform kann auf eine kraft- bzw. formschlüssige Verbindung der Befestigungseinrichtungen bzw. -dome mit dem Bauteil komplett verzichtet werden, da durch eine Befestigung von Verbindungselementen mit der Trägerrahmendichtung bereits eine formschlüssige Verbindung besteht. Die Elastomer- bzw. Gummidome sind mit Noppen oder Nasen versehen, die am Außendurchmesser oder am Innendurchmesser angebracht sind.

Es können mehrere Befestigungsvorsprünge verwendet werden, die voneinander weg bzw. zueinander weisen. Es können auch mehrere Befestigungslippen hintereinander angeordnet werden. Es ist z. b. auch möglich, eine Befestigungslippe auszuführen, die an der Innen- bzw. Außenseite wendelartig in der bzw. um die Befestigungseinrichtung verläuft.

Die vorliegende Erfindung ermöglicht eine Verliersicherung über Formschluss mit der Schrauben-Hülsenlösung und/oder über Kraft- bzw. Reibschluss an der Außenseite der Befestigungseinrichtung durch eine äußere Elastomernase.

Bevorzugt besteht die mindestens eine Befestigungsnoppe, -nase bzw. -lippe aus einem anderen Kunststoff, als die Befestigungseinrichtung. Damit kann beispielsweise eine Gummi oder Elastomerlippe an einem Befestigungsdom aus Kunststoff angeformt werden.

Vorzugsweise weist die Trägerrahmendichtung zwei Befestigungseinrichtungen bzw. -dome auf, die sich von der Dichtungsebene in verschiedene Richtungen erstrecken. Dadurch kann erreicht werden, dass sich die Dichtung selber zerstört, wenn die abzudichten Bauteile nach einer Montage wieder getrennt werden, indem mindestens einer der Befestigungsdome an einem Teil verbleibt und mindestens ein anderer Befestigungsdom an dem anderen Teil verbleibt, und die Dichtung beim Trennen zerrissen wird.

In einer weiteren bevorzugten Ausführungsform liegen mindestens zwei der Befestigungseinrichtungen bzw. dome, die sich von der Dichtungsebene in verschiedene Richtungen erstrecken, im Wesentlichen auf einer Achse. Damit können die Befestigungsdome die beiden Teile in gegebenen Grenzen gegeneinander ausrichten. Damit kann eventuell auf eine gesonderte Vorrichtung zum Ausrichten der Bauteile gegeneinander verzichtet werden.

Bevorzugt umfasst mindestens einer der Befestigungseinrichtungen bzw. -dome einen Passstift. Durch die Integration eines Passstiftes in die Dichtung bzw. in einen der Befestigungsdome kann die Anzahl der notwendigen Handhabungen zur Montage zweier Teile weiter verringert werden, da ein getrennter Schritt für die Montage des mindestens einen Passstift bzw. der Dichtung entfällt. Bei einer automatisierten Montage der Passstifte kann darüber hinaus die Dichtung, die als elastisches Element schwer zu handhaben ist, automatisch montiert werden.

Vorzugsweise umfasst mindestens eine Befestigungseinrichtung bzw. ein Befestigungsdom ein Verstärkungselement. Dieses Verstärkungselement kann beispielsweise als mindestens ein Kunststoff- oder Metallring ausgeführt sein. Das Verstärkungselement kann als eine Kunststoff- oder Metallhülse ausgeführt sein. Das Verstärkungselement kann als ein Kunststoff- oder Metallstift ausgeführt sein. Durch eine Verstärkung in Form eines zusätzlichen Blechkems im Befestigungsdom kann die Dichtung zusätzlich in der Ebene der Dichtfläche fixiert werden.

Die Blechkeme in den Befestigungseinrichtungen bzw. -domen können so eingesetzt werden, dass sie die Dichtung bevorzugt in einer Richtung parallel zu der Dichtungsfläche zentrieren. Die kann beispielsweise durch ovale Blechkerne erreicht werden. Durch diese Zentrierdome wird die Trägerrahmendichtung in der Einbaulage auf der Dichtfläche in einer Richtung oder in mehreren Richtungen fixiert.

Die Erfindung wird nachfolgend anhand der Zeichnung beispielhaft näher erläutert.

Figur 1 zeigt eine Schnittansicht eines Befestigungsdoms in einer Trägerrahmendichtung aus Kunststoff, der nicht zu der Erfindung gehört.

Figur 2 stellt eine Schnittansicht eines anderen Befestigungsdoms aus Kunststoff mit einer Metallverstärkung dar, der nicht zu der Erfindung gehört.

Figur 3 veranschaulicht einen Trägerrahmen einer Trägerrahmendichtung in einer perspektivischen Teilansicht.

Figur 4 zeigt eine Trägerrahmendichtung mit dem Trägerrahmen von Figur 3 in einer perspektivischen Teilansicht, die nicht zu der Erfindung gehört*.*

Figur 5 stellt eine Schnittansicht einer montierten erfindungsgemäßen Trägerrahmendichtung dar.

Figur 6 veranschaulicht einen weiteren Trägerrahmen einer Trägerrahmendichtung in einer perspektivischen Teilansicht.

Figur 7 zeigt eine Trägerrahmendichtung mit dem Trägerrahmen von Figur 6 in einer perspektivischen Teilansicht.

In den Figuren wie auch in der Beschreibung werden gleiche Bezugszeichen verwendet, um gleiche oder ähnliche Bauteile oder Element zu bezeichnen.

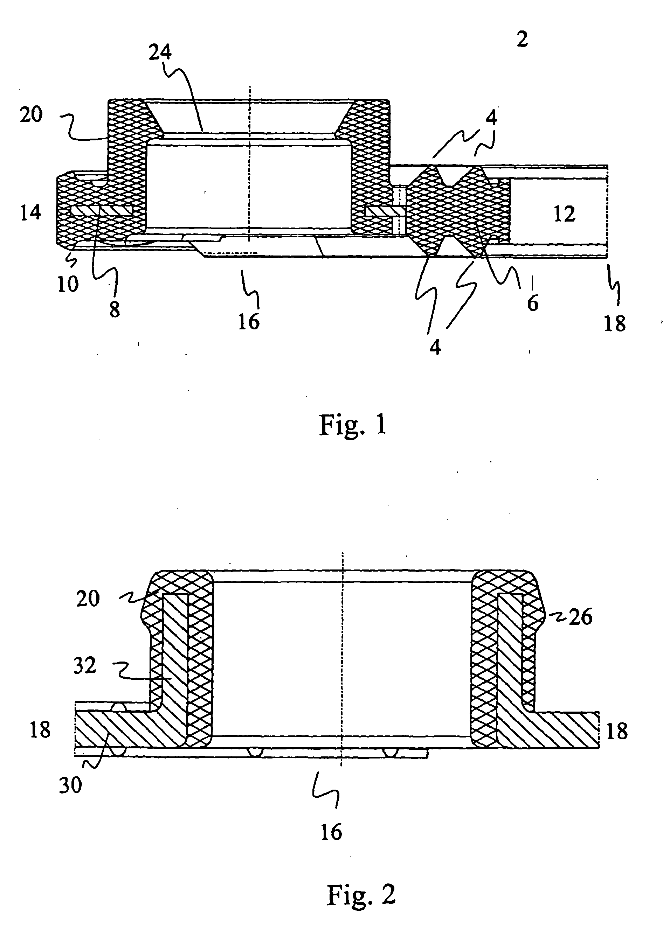

Figur 1 die nicht zu der Erfindung gehört zeigt eine Schnittansicht eines Befestigungsdoms bzw. einer Befestigungseinrichtung in einer Trägerrahmendichtung aus Kunststoff. Die Trägerrahmendichtung 2 ist mit Dichtlippen 4 dargestellt. Die dargestellte Trägerrahmendichtung 2 besteht im Wesentlichen aus einem Elastomerwerkstoff 6. Die Trägerrahmendichtung 2 ist mit einer Verstärkungslage 8 versehen. Die Trägerrahmendichtung 2 umfasst weiterhin eine abzudichtende Seite 12 und eine Außenseite 14, die mit einer weiteren Dichtlippe 10 versehen ist. Dass Bezugszeichen 18 bezeichnet eine Schnittlinie der Darstellung.

Die Trägerrahmendichtung 2 weist eine Bohrung oder ein Bolzenloch 16 auf durch die bzw. durch das ein Verbindungsbolzen die beiden abzudichten Bauteile (nicht dargestellt) verbinden kann.

Die Trägerrahmendichtung 2 ist um das Bolzenloch 16 mit einem Befestigungseinrichtung bzw. Befestigungsdom 20 versehen. Der Befestigungsdom 20 ist mit einer innen umlaufenden Nase oder Lippe 24 versehen, mit der der Befestigungsdom an einem durch das Bolzenloch 16 ragenden Element eingreifen kann.

Die erste Ausführungsform ist auf kleine Elastomer-Trägerrahmendichtungen mit einer kleinen Verstärkungslage 8 ausgerichtet.

Figur 2 die nicht zu der Erfindung gehört stellt eine Schnittansicht eines anderen Befestigungsdoms aus Kunststoff mit einer Metallverstärkung dar. Im Gegensatz zu dem Befestigungsdom von Figur 1 ist der Befestigungsdom 20 von Figur 2 mit einer Verstärkung 32 versehen. Die Verstärkung ist in der dargestellten Ausführungsform direkt aus einer Trägerlage 30 herausgeformt. Die Trägerlage 30 kann aus einem Kunststoff oder aus einem Metall, oder einem Verbundmaterial bestehen. Bei einer Metallträgerlage 30 kann die Verstärkung beispielsweise durch Tiefziehen oder Fließpressen hergestellt werden. Abweichend von Figur 1 ist der Befestigungsdom 20 von Figur 2 mit einer außen umlaufenden Nase oder Lippe 26 versehen, mit der der Befestigungsdom in eine Öffnung in einem der abzudichtenden Bauteile eingreifen kann.

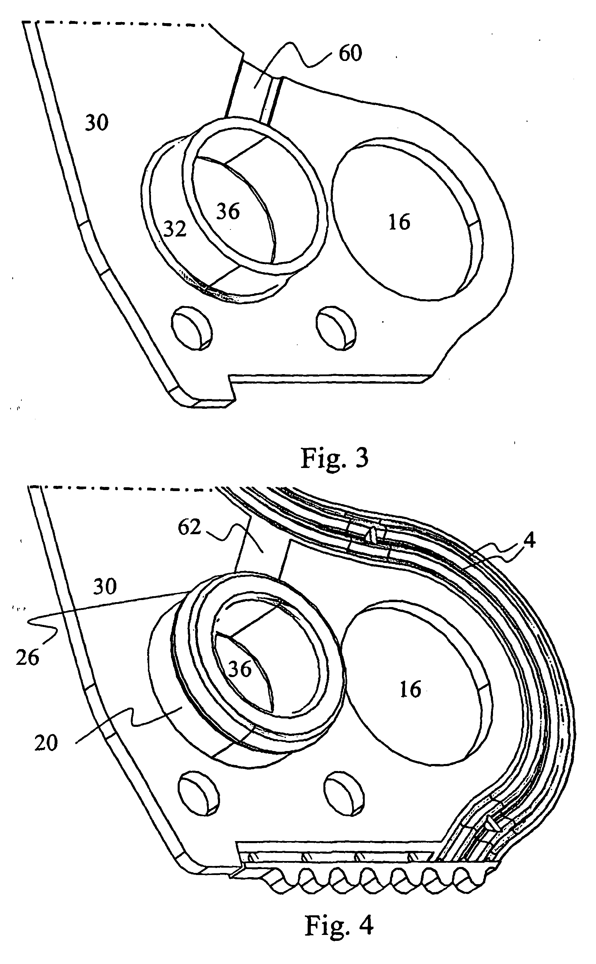

Figur 3 stellt eine Trägerlage 30 einer Trägerrahmendichtung mit einer angeformten Verstärkung 32 für einen Befestigungsdom dar. Die angeformte Verstärkung 32 ist mit einer Durchgangsöffnung 36 versehen. Die Trägerlage ist mit einem Bolzenloch 16 versehen. Die Trägerlage weist außerdem einen Formkanal 60 auf.

Figur 4 die nicht zu der Erfindung gehört zeigt eine Trägerrahmendichtung mit dem Trägerrahmen 30 von Figur 3 in einer perspektivischen Teilansicht. In Figur 4 ist der Trägerrahmen 30 mit einer Dichtungsstruktur aus einem Elastomermaterial versehen. Die Dichtungsstruktur umfasst die Dichtlippen 4. Die angeformte Verstärkung ist mit Elastomermaterial überzogen. Das Elastomermaterial über der Verstärkung bildet mit der äußeren Lippe 26 den Befestigungsdom 20. Das Elastomermaterial der Dichtungsstruktur und des Befestigungsdoms können aufgrund des (inzwischen mit Elastomermaterial 62 gefüllten) Formkanals 60 in einem Arbeitsgang angespritzt werden.

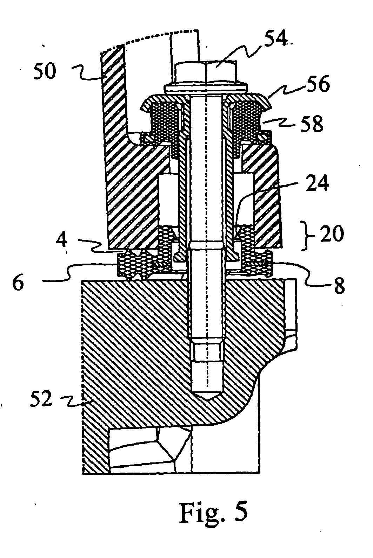

Figur 5 stellt eine Schnittansicht einer montierten erfindungsgemäßen Trägerrahmendichtung dar. Die Trägerrahmendichtung liegt zwischen zwei abzudichtenden Bauteilen 50, 52. Die Dichtung entspricht im Wesentlichen der in Figur 1 dargestellten Ausführungsform. Die beiden abzudichtenden Bauteile 50, 52 sind durch einen Schraubbolzen 54 miteinander verbunden. Der Schraubbolzen ist mit einer Verpressungsbegrenzerhülse 56 versehen, die eine maximale Einschraubtiefe für den Schraubbolzen 54 festlegt. Das Bauteil 50 ist darüber hinaus noch durch das Entkoppelelement 58 in Bezug auf den Bolzen 54 bzw. den Verpressungsbegrenzer 56 gelagert. Damit ist das Bauteil 50 gegenüber dem Bauteil 52 nicht mehr starr mechanisch gekoppelt und somit kann es bei Vibrationen nicht zu Beschädigungen oder zu einer Geräuschbildung durch ein Aufeinanderschlagen der Bauteile 50, 52, bzw. des Bauteils 50 auf den Bolzen 54 kommen.

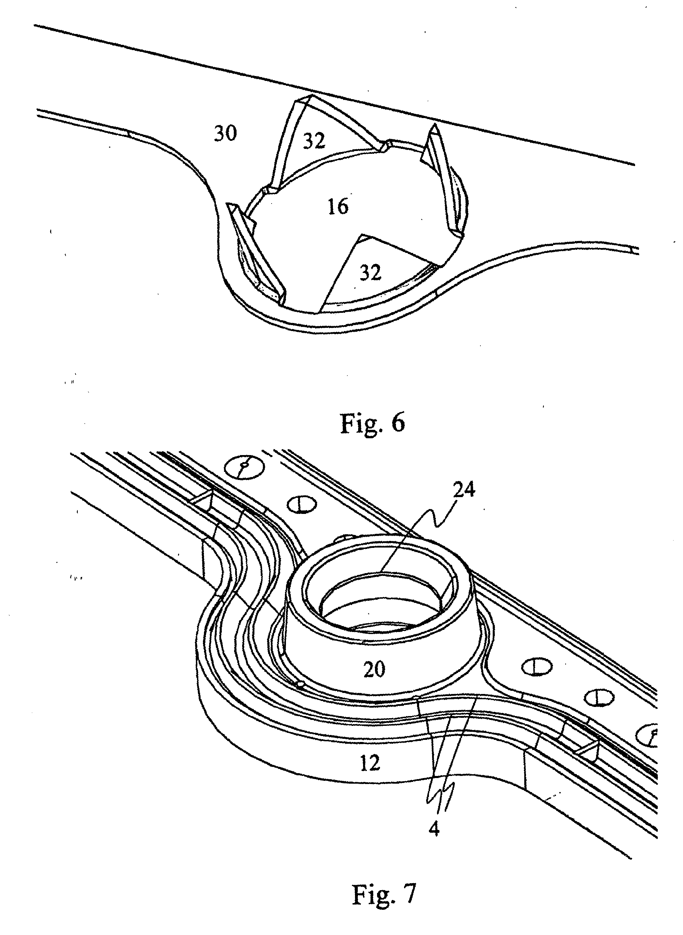

Figur 6 veranschaulicht eine weitere Ausführungsform einer Trägerlage 30 einer Trägerrahmendichtung in einer perspektivischen Teilansicht. Die Trägerrahmendichtung umfasst dabei ein Bolzenloch 16, wobei das Material der Trägerlage 30, das vorher an dem Ort des Bolzenlochs 16 lag, kronenförmig umgeformt ist. Diese Umformung bildet dabei dreieckige (oder auch rechteckige) Verstärkungen 32, die sich im Wesentlichen senkrecht zur Dichtungsebene erstrecken. Die Verstärkungen 32 dienen dazu, eine später angebrachte Befestigungseinrichtung zu verstärken. Es ist auch möglich, beispielsweise nur zwei Verstärkungen 32 zu verwenden, die gegenüberliegend angeordnet sind, um die Trägerrahmendichtung bevorzugt in eine Richtung auszurichten.

Figur 7 zeigt eine Trägerrahmendichtung mit der Trägerlage 30 von Figur 6 in einer perspektivischen Teilansicht. Die einzelnen erkennbaren Elemente sind bereits in der Figur 1 beschrieben.

Die Positionierung der Dichtung auf der Dichtfläche ist ohne zusätzliche Bauteile wie Passstifte oder Passhülsen möglich, da die Befestigungseinrichtungen bzw. -dome in der Trägerrahmendichtung integriert sind.

Selbst große Trägerrahmendichtungen können in ihrer Lage auf der Dichtfläche sicher positioniert werden.

Die vorliegende Erfindung kann über die vorstehend genannten Anwendungsgebiete hinaus auch für automatisierte Montagevorgänge von Trägerrahmendichtungen verwendet werden, indem beispielsweise die Befestigungseinrichtungen bzw. -dome als Angriffspunkte für Handhabungswerkzeuge genutzt werden.

## Patentansprüche

1. Trägerrahmendichtung (2), die mindestens eine Metalllage (30) aufweist, weiter aufweisend mindestens zwei Befestigungseinrichtungen (20), die aus Kunststoff bzw. Elastomer gebildet sind und die dazu ausgelegt sind, in entsprechende Öffnungen an mindestens einem abzudichtenden Bauteil einzugreifen, wobei mindestens eine der Befestigungseinrichtungen (20) mindestens eine Öffnung (36) aufweist, die sich im Wesentlichen senkrecht zu der Dichtungsebene erstreckt,
wobei mindestens eine Metalllage (30) so geformt ist, dass sie sich im Wesentlichen senkrecht zur Dichtungsebene in mindestens eine der Befestigungseinrichtungen (20) hinein erstreckt,
**dadurch gekennzeichnet,**
**dass** die mindestens eine Befestigungseinrichtung (20), in die sich die Metalllage (30) hinein erstreckt, mindestens einen Befestigungsvorsprung in der Form einer Befestigungs-Noppe, -Nase bzw. -Lippe (24) an der Innenseite der Öffnung aufweist, der nach innen weist.

2. Trägerrahmendichtung (2) nach Anspruch 1, wobei die Befestigungseinrichtungen (20) als Befestigungsdome in der Form eines Vorsprungs in der Gestalt eines Kegels, Kegelstumpfes, Pilzes, Kugelstumpfes, Zylinders bzw. Zylinderstumpfes öder Ellipsoids bzw. Ellipsoidstumpfes ausgeführt sind.

3. Trägerrahmendichtung (2) nach Anspruch 1 oder 2, **dadurch gekennzeichnet, dass** die mindestens eine Erstreckung der mindestens einen Metalllage (30) in die mindestens eine Befestigungseinrichtung (20) durch eine Umformtechnik ausgewählt aus Drücken, Falten, Gesenkschmieden, Prägen, Stanzen, Schneiden, Strecken, Tiefziehen und Ziehen erreicht wird.

4. Trägerrahmendichtung (2) nach einem der vorstehenden Ansprüche, **dadurch gekennzeichnet, dass** mindestens eine der Befestigungseinrichtungen (20) einen Befestigungsvorsprung in der Form einer Befestigungs-Noppe, -Nase bzw. -Lippe (26) an der Außenseite aufweist.

5. Trägerrahmendichtung (2) nach einem der vorstehenden Ansprüche, **dadurch gekennzeichnet, dass** die mindestens eine Befestigungs-Noppe, -Nase bzw. -Lippe aus einem anderen Kunststoff besteht als die Befestigungseinrichtung (20).

6. Trägerrahmendichtung (2) nach einem der vorstehenden Ansprüche, **dadurch gekennzeichnet, dass** die Trägerrahmendichtung (2) zwei Befestigungseinrichtungen (20) aufweist, die sich von der Dichtungsebene in verschiedene Richtungen erstrecken.

7. Trägerrahmendichtung (2) nach Anspruch 6, **dadurch gekennzeichnet, dass** mindestens zwei der Befestigungseinrichtungen (20), die sich von der Dichtungsebene in verschiedene Richtungen erstrecken, im Wesentlichen auf eine Achse liegen.

8. Trägerrahmendichtung (2) nach einem der vorstehenden Ansprüche, **dadurch gekennzeichnet, dass** mindestens eine Befestigungseinrichtung (20) einen Passstift umfasst.

9. Trägerrahmendichtung (2) nach einem der vorstehenden Ansprüche, **dadurch gekennzeichnet, dass** mindestens eine Befestigungseinrichtung (20) ein Verstärkungselement (32) aufweist.

10. Trägerrahmendichtung (2) nach einem der vorstehenden Ansprüche, **dadurch gekennzeichnet, dass** die Trägerrahmendichtung (2) eine Elastomer-Trägerrahmendichtung ist.

## Claims

1. Frame member gasket (2), having at least one metal layer (30), further having at least two fixing devices (20) configured from plastic or elastomer and which are designed to engage in corresponding orifices on at least one component that is to be sealed, whereby at least one of the fixing devices (20) has at least one orifice (36), which extends substantially perpendicular to the sealing plane, whereby at least one metal layer (30) is formed such that it extends substantially perpendicular to the sealing plane into at least one of the fixing devices (20),
**characterised in that**
the at least one fixing device (20), into which the metal layer (30) extends, has at least one fixing projection in the shape of a fixing nub, nose or lip (24) on the inside of the orifice, said projection facing inwards.

2. Frame member gasket (2) according to claim 1, whereby the fixing devices (20) are designed as fixing pins in the shape of a projection in the form of a cone, truncated cone, mushroom, truncated ball, cylinder or truncated cylinder, or ellipsoid or truncated ellipsoid.

3. Frame member gasket (2) according to claim 1 or 2, **characterised in that** the at least one extension of the at least one metal layer (30) into the at least one fixing device (20) is achieved by means of a forming technique selected from pressing, folding, drop forging, embossing, stamping, cutting, stretching, deep-drawing and drawing.

4. Frame member gasket (2) according to one of the preceding claims, **characterised in that** at least one of the fixing devices (20) has a fixing projection in the shape of a fixing nub, nose or lip (26) on the outside.

5. Frame member gasket (2) according to one of the preceding claims, **characterised in that** the at least one fixing nub, nose or lip is comprised of a different plastic than the fixing device (20).

6. Frame member gasket (2) according to one of the preceding claims, **characterised in that** the frame member gasket (2) has two fixing devices (20) which extend from the sealing plane in different directions.

7. Frame member gasket (2) according to claim 6, **characterised in that** at least two of the fixing devices (20) that extend from the sealing plane in different directions lie substantially on one axis.

8. Frame member gasket (2) according to one of the preceding claims, **characterised in that** at least one fixing device (20) includes an aligning pin.

9. Frame member gasket (2) according to one of the preceding claims, **characterised in that** at least one fixing device (20) has a reinforcing element (32).

10. Frame member gasket (2) according to one of the preceding claims, **characterised in that** the frame member gasket (2) is an elastomer frame member gasket.

## Revendications

1. Joint de cadre porteur (2), comportant au moins une couche métallique (30), comportant en outre au moins deux systèmes de fixation (20), qui sont conçus en matière plastique ou en élastomère et qui sont étudiés pour s'engager dans des orifices correspondants sur au moins un élément constitutif dont il faut assurer l'étanchéité, au moins un des systèmes de fixation (20) comportant au moins un orifice (36) qui s'étend sensiblement à l'horizontale du plan du joint, au moins une couche métallique (30) étant conformée de sorte à s'étendre sensiblement à la perpendiculaire du plan du joint, à l'intérieur d'au moins l'un des système de fixation (20),
**caractérisé en ce que**,
le au moins un système de fixation (20) dans lequel s'étend la couche métallique (30) comprend sur la face intérieure de l'orifice au moins une saillie de fixation sous la forme d'une nope de fixation, d'un tenon de fixation ou d'une lèvre de fixation (24) qui est dirigée vers l'intérieur.

2. Joint de cadre porteur (2) selon la revendication 1, les systèmes de fixation (20) sont réalisés en tant que dômes de fixation, sous la forme d'une saillie, ayant la conformation d'un cône, d'un cône tronqué, d'un champignon, d'une sphère tronquée, d'un cylindre ou d'un cylindre tronqué, d'une ellipse ou d'une ellipse tronquée.

3. Joint de cadre porteur (2) selon la revendication 1 ou 2, **caractérisé en ce que** la au moins une extension de la au moins une couche métallique (30) dans le au moins un système de fixation (20) est obtenue par une technique de formage, choisie parmi le gaufrage, le pliage, l'estampage, le matriçage, le poinçonnage, le découpage, le laminage, l'emboutissage et l'étirage.

4. Joint de cadre porteur (2) selon l'une quelconque des revendications précédentes, **caractérisé en ce qu'**au moins un des systèmes de fixation (20) comporte sur la faxe extérieure une saillie de fixation sous la forme d'une nope de fixation, d'un tenon de fixation ou d'une lèvre de fixation (26).

5. Joint de cadre porteur (2) selon l'une quelconque des revendications précédentes, **caractérisé en ce que** la au moins une nope de fixation, le au moins un tenon de fixation ou la au moins une lèvre de fixation consiste dans une autre matière plastique que le système de fixation (20).

6. Joint dite cadre porteur (2) selon l'une quelconque des revendications précédentes, **caractérisé en ce que** le joint de cadre porteur (2) comporte deux systèmes de fixation (20) qui s'étendent dans différentes régions à partir du plan du joint.

7. Joint de cadre porteur (2) selon la revendication 6, **caractérisé en ce qu'**au moins deux des systèmes de fixation (20) qui s'étendent dans différentes directions à partir du plan du joint se situent sensiblement sur un axe.

8. Joint de cadre porteur (2) selon l'une quelconque des revendications précédentes, **caractérisé en ce qu'**au moins un système de fixation (20) comprend un goujon d'assemblage.

9. Joint de cadre porteur (2) selon l'une quelconque des revendications précédentes, **caractérisé en ce qu'**au moins un système de fixation (20) comporte un élément de renfort (32).

10. Joint de cadre porteur (2) selon l'une quelconque des revendications précédentes, **caractérisé en ce que** le joint de cadre porteur (2) est un joint de cadre porteur en élastomère.
